# EUROPEAN PATENT APPLICATION

(11) **EP 1 876 486 A1**
(43) Date of publication of application: **09.01.2008**
(21) Application number: 07100831.2
(22) Date of filing: 19.01.2007
(51) Int. Cl.: G02B 26/08, G02B 26/10, H04N 9/31

(54) **Scanning apparatus and method**

(30) Priority: 04.07.2006 KR 20060062411
(71) Applicant: Samsung Electronics Co., Ltd., Suwon-si, Gyeonggi-Do (KR)
(72) Inventor: Lee, Byeung-leul c/o Samsung Adv. Institute of Tec, Gyeonggi-do (KR)
(74) Representative: Greene, Simon Kenneth

(57) **Abstract**

Provided are scanning apparatus and a scanning method. The scanning apparatus includes: a mirror unit for reflecting an incident light (71) while rotating around a first direction of the scanning apparatus, as well as around a second direction of the scanning apparatus, and a driving unit for driving the mirror unit so that the mirror unit can rotate around a first and a second direction of the scanning apparatus.

## Description

### BACKGROUND OF THE INVENTION

The present invention relates to a scanning apparatus and a scanning method, and more particularly, to a scanning apparatus and method capable of reducing pinch effects.

A scanning apparatus scans beams emitted from a light source to a portion of a one-dimensional area (line) or a two-dimensional area (plane) to form images. In addition, the scanning apparatus can be applied to a scanner integrated with an optical sensor such as a photodiode or a photodetector to read information formed on one-dimensional or two-dimensional region, besides an image forming apparatus.

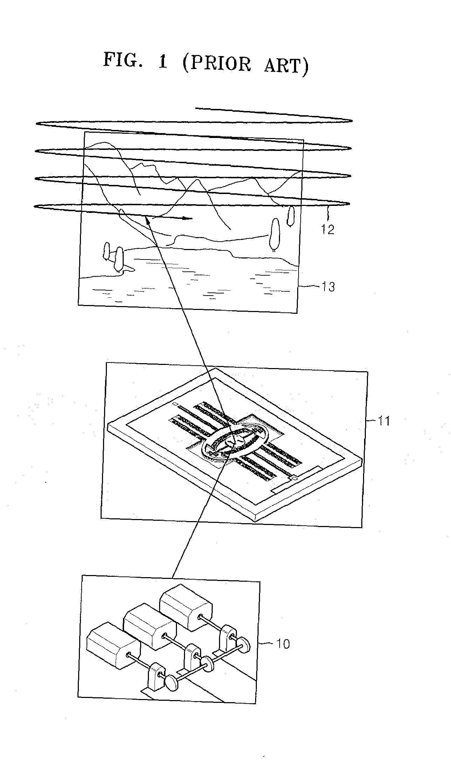

FIG. 1 is a schematic view of a general scanning type display apparatus. The display apparatus of FIG. 1 includes a laser light source 10 and a scanner 11. The scanner 11 is a two-dimensional scanner. The laser light source 10 generates laser beams according to image signals, and the scanner 11 reflects the laser beams to form scan lines 12 and display an image 13.

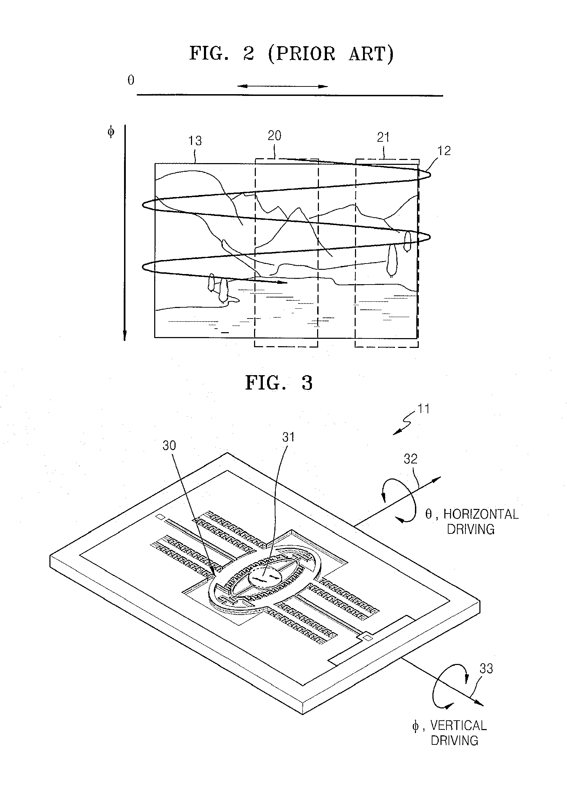

In FIG. 1, the scanning line 12 shows a scan trace according to a conventional raster scanning method. FIG. 2 illustrates the scan trace of FIG. 1, divided into a horizontal direction and a vertical direction. Referring to FIG. 2, according to the raster scanning method, intervals between each of the scan lines 12 are uniform on a center portion of the image 13, however, intervals between each of the scan lines 12 on left and right sides 21 are not uniform, and thereby, generating pinch effects and degrading a vertical resolution.

In order to reduce the pinch effect, there provides a conventional technique disclosed in U.S. Patent No. 6,140,979. However, this technique includes an additional mirror perpendicular to a horizontal rotary axis in the scanner.

### SUMMARY OF THE INVENTION

The present invention provides a scanning apparatus and method that can reduce pinch effects by controlling a behavior of a mirror included in a scanner to form Lissajours scan patterns in a horizontal direction.

According to an aspect of the present invention, there is provided a scanning apparatus comprising: a mirror unit for reflecting an incident light while rotating around a direction of the scanning apparatus, as well as around a direction of the scanning apparatus; and a driving unit for driving the mirror unit so that the mirror unit can rotate around the horizontal and the vertical directions of the scanning apparatus.

According to another aspect of the present invention, there is provided a scanning method using a scanning apparatus including a mirror unit reflecting an incident light, the scanning method comprising: generating horizontal scan lines on a screen by applying symmetrical horizontal driving signals to first both sides of the mirror unit where the first both sides locate centering a horizontal axis of the mirror unit, and applying asymmetrical horizontal driving signals to second both sides of the mirror unit where the second both sides locate centering a vertical axis; and generating vertical scan lines on the screen by applying vertical driving signals to the mirror unit for moving the scanning apparatus in the vertical direction.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic view of a general scanning type display apparatus;
FIG. 2 illustrates a scanning trace of the apparatus of FIG. 1, divided into horizontal and vertical directions;
FIG. 3 illustrates a structure of a two-dimensional raster scanner to which the present embodiment is applied;
FIG. 4 illustrates behaviors of the scanner for forming the conventional scan pattern of FIG. 2 in directions of θ axis and ϕaxis;
FIG. 5 illustrates a Lissajours pattern scan lines;
FIG. 6 illustrates an expanded view of a mirror unit in FIG. 3;
FIG. 7 illustrates behaviors of the mirror unit of FIG. 3 in θ direction and ϕ' direction for a horizontal Lisssjours pattern scanning;
FIG. 8 is a plane view of the mirror unit and a driving unit included in the scanning apparatus according to an embodiment of the present invention;
FIG. 9A is a cross-sectional view of the mirror unit and the driving unit of FIG. 8;
FIG. 9B illustrates voltages applied to the driving unit and a driving comb electrode unit of FIG. 8;
FIG. 10A illustrates V_{H1} voltage;
FIG. 10B illustrates a behavior of the mirror unit in the θ direction according to the voltages V_{H1} and V_{H2};
FIG. 10C illustrates a torque in θ direction;
FIG. 10D illustrates a torque in ϕ' direction generated by θ, voltages V_{H1} and V_{H2};
FIG. 11 is a plane view of the mirror unit and the driving unit that can control the size of the Lissajours pattern;
FIG. 12 shows a Lissajours pattern whose size is controlled by a magnitude of the torque in the ϕ' direction.

### DETAILED DESCRIPTION OF THE INVENTION

Hereinafter, a scanning apparatus and method according to the present invention will be described with reference to accompanying drawings.

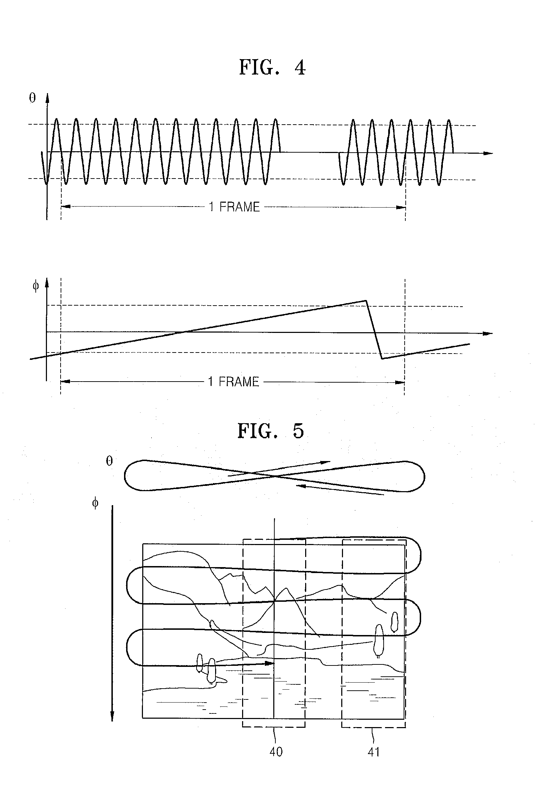

FIG. 3 illustrates a structure of a two-dimensional raster scanner to which the present embodiment is applied. The scanner 11 includes a gimbals 30, and a mirror unit 31 for reflecting laser beams. The scanner 11 forms a scan trace by a horizontal rotation around θ direction 32 of the mirror unit 31 and a vertical rotation around ϕ direction 33 of the gimbals 30. FIG. 4 illustrates behaviors of the scanner for forming the conventional scan pattern of FIG. 2 in directions of the θ axis and ϕaxis. Referring to FIG. 4, it can be noted that the scanner moves linearly in the ϕaxis direction while rotating around the θ axis within a single frame. The above described raster scanning method causes pinch effects on both sides of the screen as described above.

Accordingly, in order to reduce the pinch effects, it needs to scan in a Lissajours pattern in a horizontal direction of the screen as shown in FIG. 5. Referring to FIG. 5, once the Lissajours pattern scanning is performed in the horizontal direction of the screen, intervals between the scan lines on left/right sides 41 of the screen are as uniform as the intervals between the scan lines on a central portion 40 of the screen, and thus, the pinch effect can be reduced.

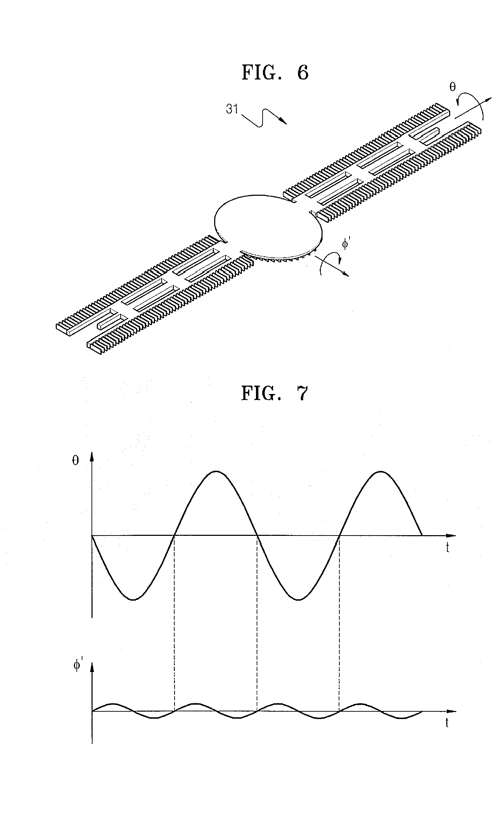

FIG. 6 is an expanded view of the mirror unit 31 of FIG. 3. For the horizontal Lissajours pattern scanning, the mirror unit 31 must rotate around a ϕ' direction as well as the θ direction, in addition to the rotation of the gimbals 30 around the ϕ direction.

FIG. 7 illustrates behaviours of the mirror unit 31 in the θ direction and in the ϕ' direction for the horizontal Lissajours pattern scanning. Referring to FIG. 7, the behaviour of the mirror unit 31 in the ϕ' direction has a frequency twice as that of the behaviour in the θ direction, and phases of the two behaviours are identical.

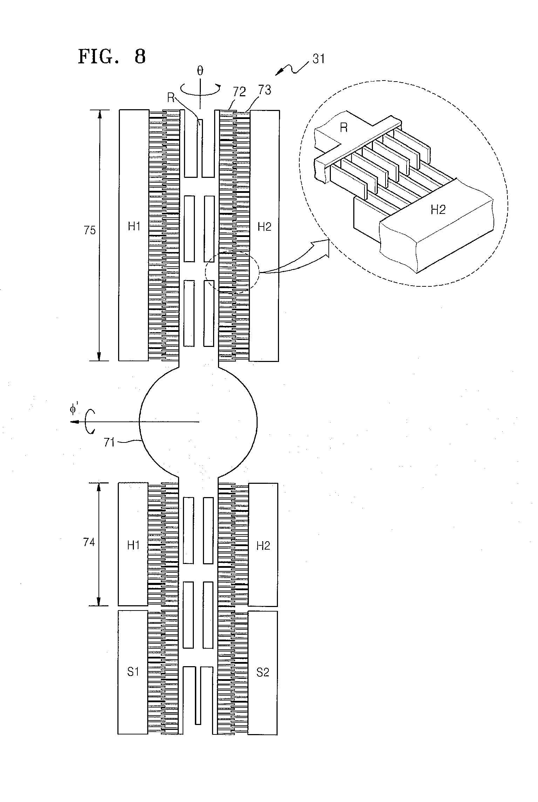

FIG. 8 illustrates the mirror unit 31 and a driving unit included in the scanning apparatus according to the embodiment of the present invention. The mirror unit 31 includes a mirror 71 and a rotation comb electrode unit R including rotation comb electrodes 72 on its both blades. The driving units H1 and H2 include driving comb electrodes 73. The rotation comb electrodes 72 and the driving comb electrodes 73 are alternately arranged with each other as shown in expanded view in FIG. 8.

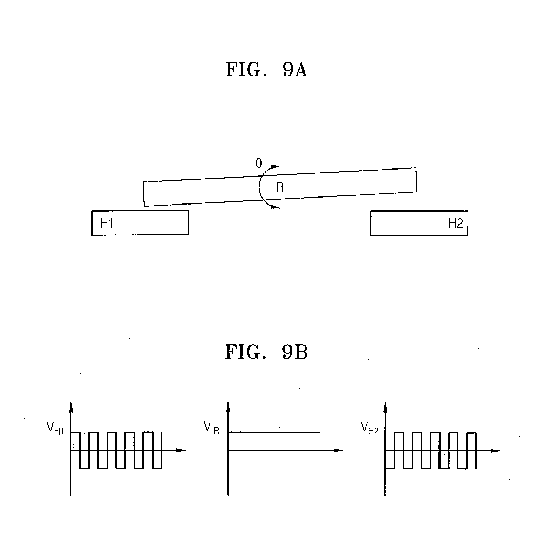

FIG. 9A is a cross-sectional view of the mirror unit 31 and the driving units H1 and H2 of FIG. 8, and FIG. 9B illustrates voltages applied to the driving units H1 and H2 and the rotation comb electrode unit R.

Referring to FIG. 9A and 9B, when a voltage V_{R} is applied to the rotation comb electrode unit R and voltages V_{H1} and V_{H2} having opposite phases to each other are applied to the driving units H1 and H2 that correspond to both sides of the rotation comb electrode unit R, a difference between voltages applied to the driving unit H1 and the rotation comb electrode unit R, that is, V_{R}-V_{H1}, is different from a difference between voltages applied to the driving unit H2 and the rotation comb electrode unit R (V_{R}-V_{H2}), that is, (V_{R}+V_{H1}), and then, the mirror unit 31 is inclined toward one side by an electrostatic force. Then, when the voltages of phases, opposite to the previous ones respectively, are applied to the driving units H1 and H2, the mirror unit 31 is inclined toward the other side, and thus, the mirror unit 31 rotates around the θ direction.

Referring to FIG. 8 again, a length 74 of H1 or H2, or a whole area of the driving units H1 or H2, located on a lower portion of the mirror unit 31 are different from a length 75 or a whole area of the driving units H1 or H2 located on an upper portion of the mirror unit 31. It is for the Lissajours pattern scanning. That is, as the length or the area of the upper driving unit H1 or H2 differs from that of the lower driving unit H1 or H2, the torque generated by the same voltage varies, and thus, the mirror unit 31 rotates in the ϕ' direction. Here, the torque is generated in proportion to a square voltage. In FIG. 8, S1 and S2 may be sensor electrodes for sensing horizontal balance.

The area of the upper driving unit H1 or H2 is shown different from that of the lower driving unit H1 or H2 in FIG.8. In order to obtain the same result as the above-described, the upper and lower driving unit H1 or H2 may have an identical area with a different applied voltage as another embodiment.

FIG. 10A through 10E illustrate torques and behaviours in each of the θ direction, ϕ direction, and ϕ' direction when the driving voltage V_{H1} is applied to the driving units H1. FIG. 10A shows the voltage V_{H1}, and the voltage V_{H2} is V_{H1} with an opposite phase to the voltage V_{H1}.

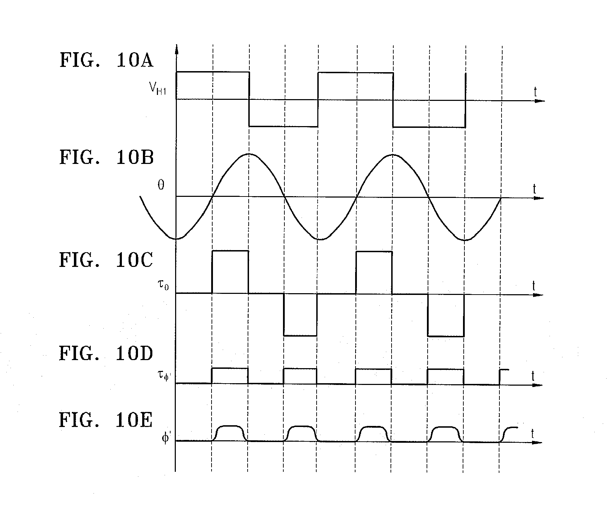

FIG. 10B illustrates a behaviour of the mirror unit 31 in the θ direction according to the voltages V_{H1} and V_{H2}. FIG. 10C illustrates the torque generated in the θ direction. According to FIG. 10A through 10C, the phase of the torque is determined according to the θ value and the driving voltages V_{H1} and V_{H2}.

FIG. 10D illustrates the torque generated in the ϕ' direction by the θ value and the voltages V_{H1} and V_{H2}.

Referring to FIG. 10D, the ϕ' direction torque is generated in the frequency twice as that of the θ direction torque. Accordingly, the mirror unit 31 rotates around the ϕ' direction as shown in FIG. 10E. Therefore, the Lissajours pattern scanning can be achieved by the behaviours of the mirror unit 31 in the θ direction and the ϕ' direction to reduce the pinch effects.

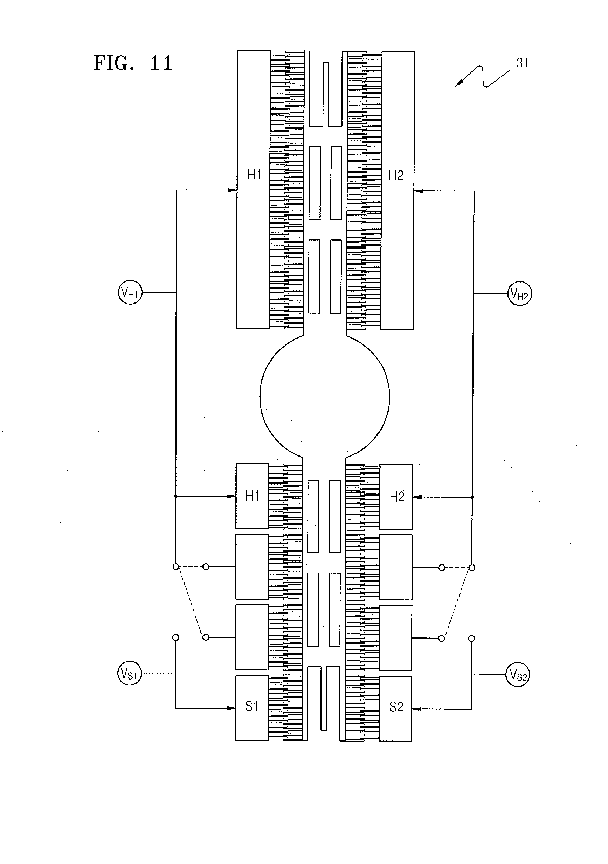

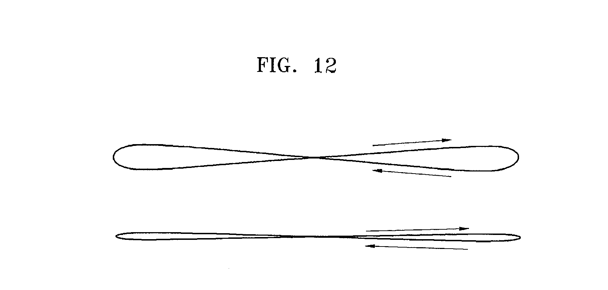

FIG. 11 illustrates the mirror unit 31 and the driving units H1 and H2 that can control the size of the Lissajours pattern. Referring to FIG. 11, the lower driving units H1 and H2 are divided into a plurality of pieces, and the number of pieces, to which the voltages will be applied, is determined to control the magnitude of the torque generated in the ϕ' direction. FIG. 12 illustrates the Lissajours pattern, the size of which is controlled according to the magnitude of the torque generated in the ϕ' direction.

According to the present invention, the mirror unit of the scanner is driven in the Lissajours pattern, and thus, the pinch effect occurring on the screen can be reduced.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A scanning apparatus comprising:
a mirror unit for reflecting an incident light while rotating around a vertical direction of the scanning apparatus, as well as around a horizontal direction of the scanning apparatus; and
a driving unit for driving the mirror unit so that the mirror unit can rotate around the horizontal and the vertical directions of the scanning apparatus.

2. The scanning apparatus of claim 1, wherein the mirror unit comprises:
a mirror for reflecting the incident light; and
first and second rotation comb electrode units, connected to both sides of the mirror, including first and second comb electrodes on both blades, respectively.

3. The scanning apparatus of claim 2, wherein the driving unit comprises:
a first driving comb electrode unit including third comb electrodes that are alternately arranged with the first comb electrodes of the first rotation comb electrode unit; and
a second driving comb electrode unit including fourth comb electrodes that are alternately arranged with the second comb electrodes of the second rotation comb electrode unit,
wherein a length of the first driving comb electrode unit is different from a length of the second driving comb electrode unit.

4. The scanning apparatus of claim 3, wherein, in the first driving comb electrode unit, the third comb electrodes are divided into a plurality of pieces and a portion of the pieces required to rotate the mirror unit around the vertical direction are wired and used as a single comb electrode.

5. The scanning apparatus of claim 3 or 4, wherein, in the second driving comb electrode unit, the fourth comb electrodes are divided into a plurality of pieces and a portion of the pieces required to rotate the mirror unit around the vertical direction are wired and used as a single comb electrode.

6. The scanning apparatus of any one among claim 3 through claim 5,
wherein the first and second driving comb electrode units receive voltages of an identical magnitude.

7. The scanning apparatus of any of claims 2 to 6, wherein the driving unit comprises:
a first driving comb electrode unit including third comb electrodes that are alternately arranged with the first comb electrodes of the first rotation comb electrode unit; and
a second driving comb electrode unit including fourth comb electrodes that are alternately arranged with the second comb electrodes of the second rotation comb electrode unit,
wherein voltages applied to the first and second driving comb electrode units have different magnitudes from each other.

8. The scanning apparatus of any preceding claim, wherein the driving unit drives the mirror unit so that a frequency of the rotation of the mirror unit around the vertical direction is twice a frequency of the rotation of the mirror unit around the horizontal direction.

9. The scanning apparatus of any preceding claim, wherein the driving unit generates a first torque so that the mirror unit can rotate around the horizontal direction, and generates a second torque having a frequency twice a frequency of the first torque so that the mirror unit can rotate around the vertical direction.

10. The scanning apparatus of claim 9, wherein the first torque is generated by applying driving signals having an identical magnitude and opposite phases to first both sides of the mirror unit where the first both sides locate centering a horizontal axis of the mirror unit, and the second torque is generated by applying the driving signals to second both sides of the mirror unit where the second both sides locate centering a vertical axis and have different areas from each other.

11. A scanning method using a scanning apparatus including a mirror unit reflecting an incident light, the scanning method comprising:
generating horizontal scan lines on a screen by applying symmetrical horizontal driving signals to first both sides of the mirror unit where the first both sides locate centering a horizontal axis of the mirror unit, and applying asymmetrical horizontal driving signals to second both sides of the mirror unit where the second both sides locate centering a vertical axis; and
generating vertical scan lines on the screen by applying vertical driving signals to the mirror unit for moving the scanning apparatus in the vertical direction.

12. The scanning method of claim 11, further comprising:
controlling a size of the horizontal scan lines by controlling a magnitude of the asymmetric horizontal driving signals.

13. The scanning method of claim 11 or 12, wherein the applying of the asymmetric horizontal driving signals is performed by differing areas of electrodes, to which the symmetric horizontal driving signals are applied.
